# EUROPÄISCHE PATENTANMELDUNG

(11) **EP 2 228 170 A1**
(43) Veröffentlichungstag der Anmeldung: **15.09.2010**
(21) Anmeldenummer: 09003634.4
(22) Anmeldetag: 12.03.2009
(51) Int. Cl.: B23Q 3/06

(54) **Werkstückspannvorrichtung mit Spanngurt**

(71) Anmelder: Siemens Aktiengesellschaft, 80333 München (DE); Fraunhofer-Gesellschaft zur Förderung der angewandten Forschung e.V., 80686 München (DE)
(72) Erfinder: Fries, Edgar, 14129 Berlin (DE); Lischka, Jan-Marc, 13158 Berlin (DE); Uhlmann, Eckart, 25368 Kiebitzreihe (DE)

(57) **Zusammenfassung**

Die Erfindung betrifft eine Werkstückspannvorrichtung (10) zum Spannen eines Werkstückes (12), insbesondere einer Turbinenschaufel (12) im Bereich des Schaufelblattes (12a), während einer maschinellen Bearbeitung, die einen Grundkörper (14; 80) mit einer Werkstückaufnahme (16; 82) aufweist, wobei wenigstens ein Spanngurt (28a; 28b) zum Spannen des Werkstückes (12) vorgesehen ist

## Beschreibung

Die vorliegende Erfindung betrifft eine Werkstückspannvorrichtung zum Spannen eines Werkstückes während einer maschinellen Bearbeitung, insbesondere eine Turbinenschaufelspannvorrichtung zum Spannen einer Turbinenschaufel im Bereich des Schaufelblattes, die einen Grundkörper mit einer Werkstückaufnahme aufweist.

Die Herstellung von Turbinenschaufeln ist im Stand der Technik bekannt. Dazu wird in einem ersten Schritt ein Rohling der Turbinenschaufel gegossen. Anschließend wird das Schaufelblatt des Rohlings in einer Werkstückspannvorrichtung fixiert und die Endgeometrie des Schaufelfußes unter Materialabtrag, beispielsweise durch Schleifen, Fräsen oder dergleichen ausgebildet.

Zum Spannen der kompliziert geformten Schaufelblätter kommen unterschiedliche Spanntechniken zum Einsatz, wie beispielsweise das Eingießen in niedrig schmelzende Legierungen, das Hartspannen mittels Klemmhebel oder das sogenannten Einigeln.

Beim Eingießen in niedrig schmelzende Legierungen wird das Schaufelblatt in einen Block aus einer niedrig schmelzenden Metalllegierung eingegossen. Nach Erstarren des Blockes kann dieser mit Hilfe herkömmlicher Werkstückspannvorrichtungen gespannt werden, so dass sich der Schaufelfuß problemlos bearbeiten lässt. Nach der Bearbeitung des Werkstückes lässt sich die niedrig schmelzende Legierung wieder zurückgewinnen und anschließend weiter verwenden. Ein Nachteil dieser Technik besteht darin, dass sowohl das Eingießen des Schaufelblattes in die niedrig schmelzende Legierung sowie das Entfernen des Legierungsblockes nach der Bearbeitung des Schaufelblattes sehr aufwendig sind, weshalb dieses Verfahren sehr zeitintensiv und teuer ist.

Eine Werkstückspannvorrichtung zum Hartspannen mittels Klemmhebel ist beispielsweise in der US 2003/0114080 A1 offenbart. Bei dieser Werkstückspannvorrichtung erfolgt ein Positionieren des Schaufelblattes mit Hilfe von Anschlägen, die an einem Grundkörper der Werkstückspannvorrichtung ausgebildet sind. Hierbei wird das Schaufelblatt zunächst gegen einen ersten Satz von Anschlägen gestützt, der eine Bewegung des Werkstückes in die Richtung senkrecht zu einer Ebene des Grundkörpers verhindert. Daraufhin wird ein bewegbarer Klemmhebel betätigt, der das Schaufelblatt gegen weitere Sätze von Anschlägen drückt, welche eine Bewegung des Schaufelblattes innerhalb der Ebene des Grundkörpers verhindern. Auch hierbei ist von Nachteil, dass die Werkstückspannvorrichtung konstruktiv aufwendig und somit teuer ist.

Bei der Einigeltechnik wird die komplexe Geometrie des Schaufelblattes auf einer Bezugsseite an einer Vielzahl von Stützstellen durch Stützelemente abgefangen, die aus Nadel bestehen. Das Werkstück wird danach bezogen auf eine innere Achse durch Verschieben der Stützelemente in ihrer Höhenlage ausgerichtet, woraufhin an Stützstellen der Gegenseite die dortige Vielzahl von Stützelementen in Anlage an den dortigen Oberflächenverlauf gebracht wird. Gleichzeitig werden die Stützelemente beider Seiten gegeneinander verspannt. Die Werkstückspannvorrichtung hierzu besteht aus zwei einander zugewandten Spanneinheiten, wobei die Nadeln in Führungsplatten abgedichtet gelagert sind und in einen Druckraum ragen und unter Druck eines Fluides bis zur Fixierung des aufgebrachten Druckzustandes stehen. Eine derartige Werkstückspannvorrichtung ist beispielsweise in der DE 41 24 340 A1 offenbart. Ein wesentlicher Nachteil dieser Technik besteht darin, dass die Werkstückspannvorrichtung konstruktiv sehr aufwendig und entsprechend teuer ist.

Es ist eine Aufgabe der vorliegenden Erfindung, eine Werkstückspannvorrichtung der eingangs genannten Art zu schaffen, die preiswert herzustellen ist. Ferner sollen mit Hilfe der erfindungsgemäßen Werkstückspannvorrichtung kurze Spannzeiten und eine gute Zugänglichkeit des Werkstückes während der Bearbeitung realisiert werden. Zudem soll die Werkstückspannvorrichtung so ausgebildet sein, dass Geometrieabweichungen des Werkstückes, insbesondere eines Turbinenschaufelrohlings, keinen wesentlichen Einfluss auf die Spannsituation haben. Auch soll die Werkstückspannvorrichtung gemäß der vorliegenden Erfindung derart ausgebildet sein, dass Fertigungsfehler aufgrund fehlerhaft gespannter Werkstücke minimiert werden.

Zur Lösung dieser Aufgabe bzw. Aufgaben schafft die vorliegende Erfindung eine Werkstückspannvorrichtung der eingangs genannten Art, bei der wenigstens ein Spanngurt zum Spannen des Werkstückes vorgesehen ist. Ein derartiger Spanngurt ist dahingehend von Vorteil, dass sich sehr kurze Spannzeiten realisieren lassen. Auch Geometrieabweichungen des zu bearbeitenden Werkstückes bleiben aufgrund der Flexibilität des Spanngurtes ohne wesentlichen Einfluss auf die Spannsituation. Aufgrund der geringen Bauhöhe des Spanngurtes wird zudem eine sehr gute Zugänglichkeit des Werkstückes im gespannten Zustand erzielt. Ferner sorgt die Verwendung eines Spanngurtes anstelle eines konventionellen Spannbügels für ein besseres Steifigkeits-/Gewichtsverhältnis und erleichtert die Handhabung der Werkstückspannvorrichtung. Ein Spanngurt hat zudem eine große Auflagefläche und einen großen Umschlingungswinkel am Werkstück und kann in Abhängigkeit von dem verwendeten Gurtwerkstoff eine gute Dämpfung erzielen und Schwingungen während der Werkstückbearbeitung vermeiden.

Bevorzugt ist der wenigstens eine Spanngurt aus einem Fasermaterial hergestellt. Das Fasermaterial ist vorteilhaft ein Gewebe mit hoher Reißfestigkeit.

Der wenigstens eine Spanngurt ist bevorzugt in seiner Spannlänge einstellbar an dem Grundkörper fixierbar. Durch die variable Spannlänge lassen sich Werkstücke mit verschiedensten Geometrien spannen, so dass die erfindungsgemäße Werkstückspannvorrichtung sehr flexibel einsetzbar ist.

Die Werkstückaufnahme ist bevorzugt zumindest teilweise durch Auflagepunkte oder Auflageflächen definierende Auflageelemente gebildet, die zum Positionieren des Werkstückes vorgesehen sind. Diese Auflageelemente können entweder einteilig mit dem Grundkörper ausgebildet oder als separate Bauteile an dem Grundkörper befestigt sein.

Auch kann die Werkstückaufnahme zumindest teilweise durch wenigstens eine Auflagefläche definiert sein, deren Kontur zumindest teilweise an eine Außenkontur eines zu spannenden Werkstücks formangepasst ist, insbesondere an die Außenkontur eines Turbinenschaufelblattes, um eine vorbestimmte Positionierung des Werkstückes an der Werkstückspannvorrichtung zu erzielen.

Bevorzugt sind an dem Grundkörper Klemmeinrichtungen zum Fixieren des wenigstens einen Spanngurtes vorgesehen, wie beispielsweise in Form von zwei einander gegenüberliegenden Klemmplatten, die mit dem zwischen diesen positionierten Spanngurt gegeneinander verschraubt werden können.

Vorteilhaft ist zumindest eine automatische Spanneinrichtung vorgesehen, die derart ausgebildet ist, dass sie den wenigstens einen Spanngurt automatisch bis zum Erreichen einer vorbestimmten Spannkraft spannt. Dabei ist die vorbestimmte Spannkraft vorteilhaft vom Benutzer einstellbar.

Gemäß einer Ausführungsform umfasst die zumindest eine Spanneinrichtung einen Linearmotor, an dessen Kolbenstange eine Klemmeinrichtung befestigt ist, so dass diese zusammen mit der Kolbenstange bewegbar ist, um den zugeordneten Spanngurt wahlweise zu spannen oder zu entspannen.

Der Grundkörper ist bevorzugt lösbar an verschiedenen Werkstückbearbeitungsmaschinen montierbar. Entsprechend kann ein an dem Grundkörper gehaltenes Werkstück im gespannten Zustand von einer Werkstückbearbeitungsmaschine zu einer anderen transportiert werden. Entsprechend verbleibt das Werkstück während verschiedener Prozessschritte in der Werkstückspannvorrichtung, so dass ein Umspannen des Werkstückes vollständig entfallen kann. Auf diese Weise können Fertigungsfehler aufgrund fehlerhaft gespannter Werkstücke minimiert werden.

Bevorzugt ist der Grundkörper derart ausgebildet, dass er sich lösbar unter Verwendung eines Nullpunkt-Spannsystems in einer Werkstückbearbeitungsmaschine montieren lässt.

Der Grundkörper weist bevorzugt wenigstens ein mit einem Nullpunkt-Spannsystem zusammenwirkendes Spannelement auf, insbesondere in Form eines Anzugsbolzens.

Gemäß einer Ausführungsform der vorliegenden Erfindung ist an dem Grundkörper wenigstens eine Werkstückabstützeinrichtung, insbesondere eine Schaufelfußabstützeinrichtung derart befestigbar, dass eine an dieser ausgebildete Abstützfläche mit dem Werkstück zur Anlage kommt.

Gemäß einer weiteren Ausführungsform ist an dem Grundkörper wenigstens eine Kühlfluidleiteinrichtung derart befestigbar, dass der Fluidstrom eines Kühlfluides während einer spanenden Bearbeitung des Werkstückes in vorbestimmter Weise beeinflusst wird.

Hinsichtlich weiterer vorteilhafter Ausgestaltungen der Erfindung wird auf die Unteransprüche sowie die nachfolgende Beschreibung eines Ausführungsbeispiels unter Bezugnahme auf die beiliegende Zeichnung verwiesen. Darin ist
- Figur 1: eine perspektivische Ansicht einer Werkstückspann- vorrichtung gemäß einer ersten Ausführungsform der vorliegenden Erfindung, in die eine Turbinenschau- fel im Bereich ihres Schaufelblattes eingespannt ist;
- Figur 2: eine Querschnittansicht entlang der Linie II-II in Figur 1;
- Figur 3: eine Querschnittansicht entlang der Linie III-III in Figur 1;
- Figur 4: eine perspektivische Draufsicht eines Grundkörpers der in Figur 1 dargestellten Werkstückspannvorrich- tung;
- Figur 5: eine perspektivische Unteransicht des in Figur 4 dargestellten Grundkörpers;
- Figur 6: eine perspektivische Teilansicht der in Figur 1 dargestellten Werkstückspannvorrichtung, an deren Grundkörper stirnseitig eine untere Abstützeinrich- tung zum Abstützen des Turbinenschaufelfußes befes- tigt ist;
- Figur 7: eine perspektivische Ansicht der in Figur 1 darge- stellten Werkstückspannvorrichtung, an deren Grund- körper eine untere Abstützeinrichtung sowie zwei seitliche Abstützeinrichtungen zum Abstützen des Turbinenschaufelfußes befestigt sind; und
- Figur 8: eine perspektivische Ansicht eines Grundkörpers einer Werkstückspannvorrichtung gemäß einer zweiten Ausführungsform der vorliegenden Erfindung.

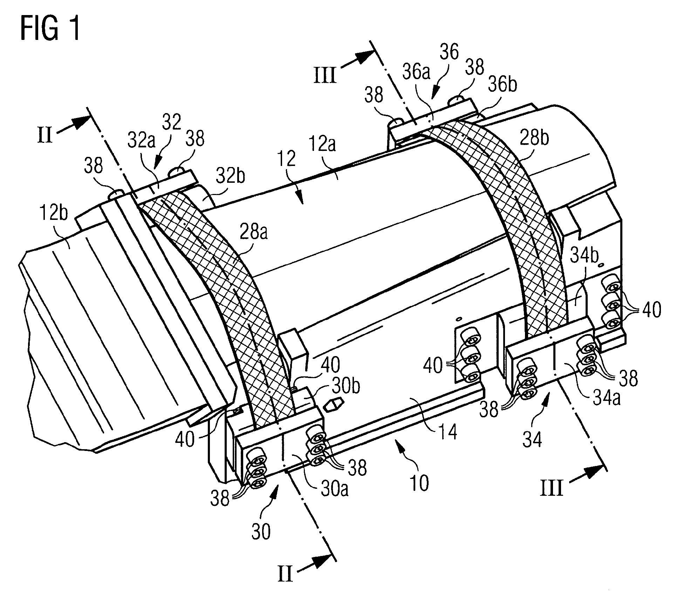

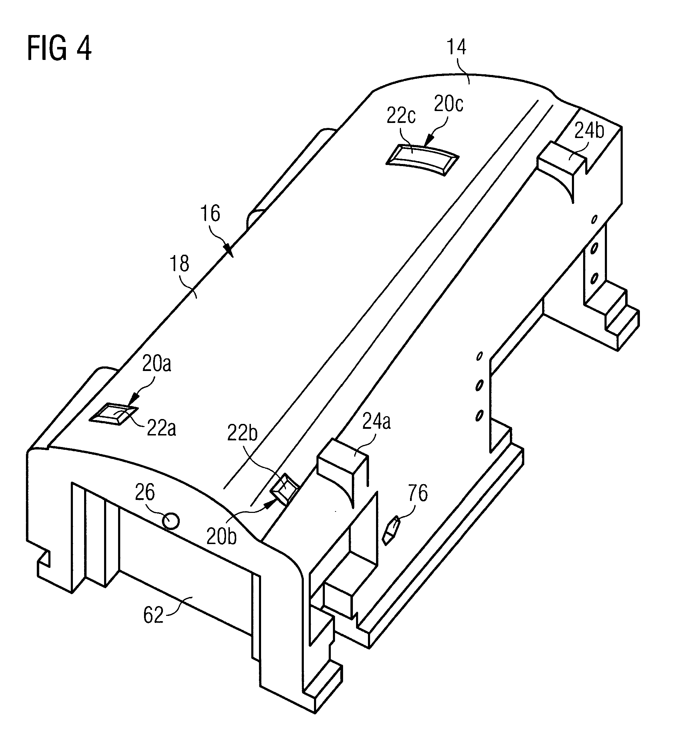

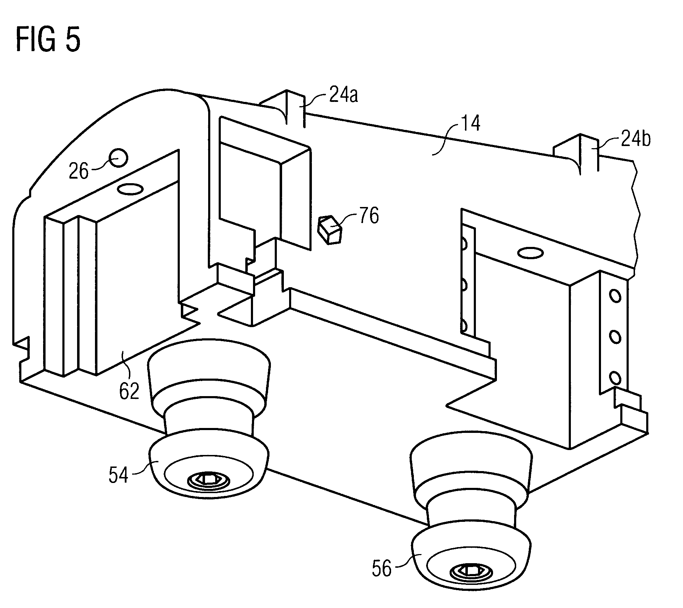

Die Figuren 1 bis 7 zeigen eine erste Ausführungsform einer erfindungsgemäßen Werkstückspannvorrichtung 10, an der ein Werkstück in Form einer ein Schaufelblatt 12a und einen Schaufelfuß 12b aufweisenden Turbinenschaufel 12 eingespannt ist. Die Werkstückspannvorrichtung 10 umfasst einen Grundkörper 14 aus Metall, an dessen Oberseite eine Werkstückaufnahme 16 zur Aufnahme des Schaufelblattes 12a der Turbinenschaufel 12 ausgebildet ist. Die Werkstückaufnahme 16 umfasst eine Grundfläche 18, deren Kontur im Wesentlichen an die Außenkontur der Unterseite des Schaufelblattes 12a der Turbinenschaufel 12 formangepasst ist. Ferner weist die Werkstückaufnahme 16 drei von der Grundfläche 18 vorstehende und an die Kontur der Unterseite des Schaufelblattes 12a formangepasste Auflageelemente 20 auf, die jeweils eine Auflagefläche 22 definieren, auf denen die Unterseite des Schaufelblattes 12a der Turbinenschaufel 12 ruht. Durch diese Auflageelemente 20 wird eine stabile Dreipunktlagerung erzeugt.

Eine vorbestimmte Positionierung der Turbinenschaufel 12 an der Werkstückaufnahme 16 wird über zwei Schaufelblattanschläge 24 und einen Schaufelfußanschlag 26 erzielt. Die beiden Schaufelblattanschläge 24 sind seitlich neben der Werkstückaufnahme 16 beabstandet voneinander angeordnet und als einteilig mit dem Grundkörper 14 ausgebildete und aufwärts vorstehende Vorsprünge vorgesehen. Bei dem Schaufelfußanschlag 26 handelt es sich um einen im Wesentlichen halbkreisförmigen Vorsprung, der ausgehend von der zum Schaufelfuß 12b weisenden Stirnseite des Grundkörpers 14 auswärts in Richtung des Schaufelfußes 12b vorsteht.

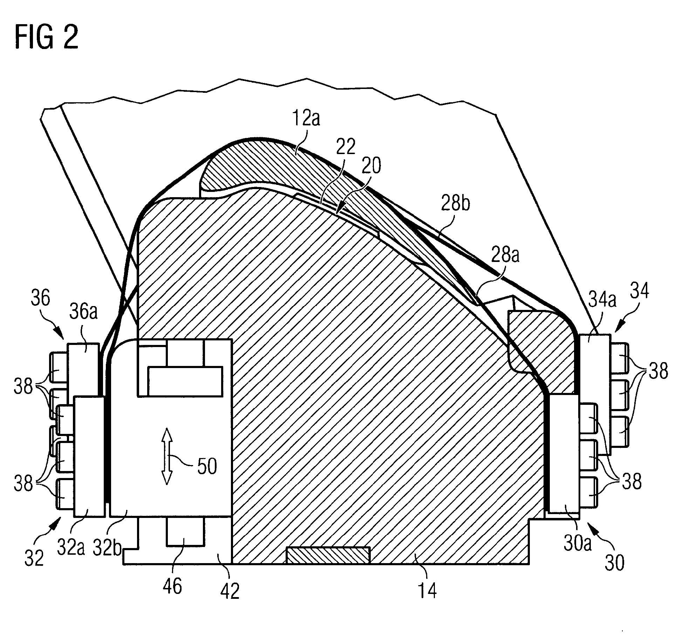

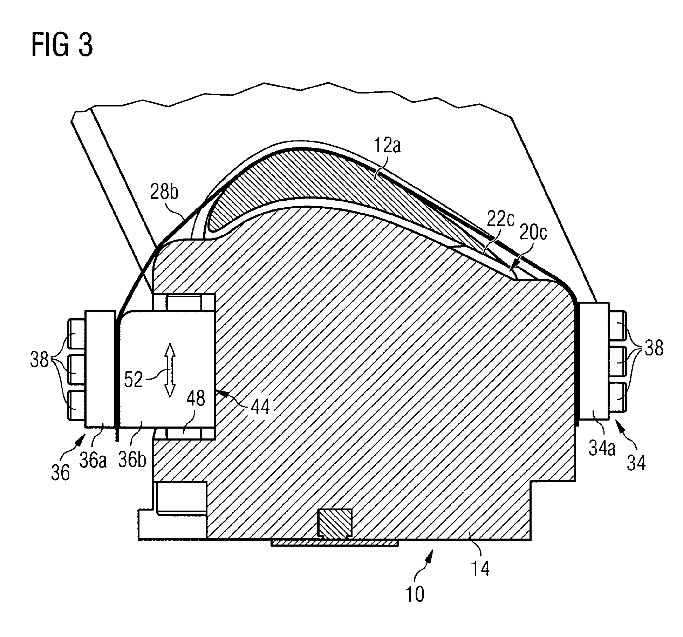

Zum Spannen der an der Werkstückaufnahme des Grundkörpers 14 angeordneten Turbinenschaufel 12 umfasst die Werkstückspannvorrichtung 10 zwei Spanngurte 28a und 28b. Die Spanngurte 28a, 28b sind jeweils an zwei seitlich und einander gegenüber an dem Grundkörper 14 vorgesehenen Klemmeinrichtungen 30 und 32 bzw. 34 und 36 gehalten. Sie sind jeweils aus einem Fasermaterial hergestellt, wobei es sich bei dem Fasermaterial um ein Gewebe mit hoher Reißfestigkeit handelt. Die Klemmeinrichtungen 30, 32, 34 und 36 umfassen jeweils zwei einander gegenüberliegende Klemmplatten 30a, b, 32a, b, 34a, b und 36a, b, die über Befestigungsschrauben 38 lösbar miteinander verbunden sind und den zwischen diesen angeordneten Spanngurt 28a bzw. 28b klemmend halten. Ausgehend von den am seitlichen Grundkörper 14 befestigten Klemmeinrichtungen 30 und 34 erstrecken sich die Spanngurte 28a und 28b aufwärts, umschlingen das Schaufelblatt 12a der Turbinenschaufel 12 und sind dann wieder abwärts zu den Klemmeinrichtungen 32 und 36 geführt, die an der gegenüberliegenden Seite des Grundkörpers 14 angeordnet sind. Während die Klemmeinrichtungen 30 und 34 über Befestigungsschrauben 40 ortsfest an dem Grundkörper 14 fixiert sind, sind die Klemmeinrichtungen 32 und 36 jeweils mit einer automatischen Spanneinrichtung 42, 44 wirkverbunden, genauer gesagt mit einer sich im Wesentlichen vertikal erstreckenden Kolbenstange 46, 48 eines die Spanneinrichtung 42, 44 bildenden hydraulischen Linearmotors. Entsprechend sind die Klemmeinrichtungen 32 und 36 zusammen mit den zugeordneten Kolbenstangen 46 und 48 vertikal auf- und abwärts bewegbar, wodurch wahlweise ein Spannen oder ein Entspannen der zugeordneten Spanngurte 28a und 28b erfolgt, wie es durch die Pfeile 50 und 52 in den Figuren 2 und 3 angedeutet ist. Die Spanneinrichtungen 42 und 44 sind derart ausgebildet, dass sie den zugeordneten Spanngurt 28a, 28b automatisch bis zum Erreichen einer vorbestimmten Spannkraft spannen, wobei die vorbestimmte Spannkraft durch einen Benutzer in vorbestimmte Grenzen einstellbar ist.

An der Unterseite des Grundkörpers 14 sind zwei Anzugsbolzen 54 und 56 befestigt, die dazu dienen, die Werkstückspanneinrichtung 10 an Nullpunkt-Spannsystemen verschiedener Werkzeugmaschinen zu befestigen (nicht gezeigt), um die Turbinenschaufel 12 entsprechend bearbeiten zu können.

Muss eine Bearbeitung der Turbinenschaufel 12 in verschiedenen Werkzeugmaschinen erfolgen, so kann die gesamte Werkzeugspannvorrichtung 10 zusammen mit der in dieser gespannten Turbinenschaufel 12 aus dem Nullpunkt-Spannsystem einer Werkzeugmaschine entnommen und an einem weiteren Nullpunkt-Spannsystem einer anderen Werkzeugmaschine angeordnet werden. Ein Umspannen der Turbinenschaufel 12 selbst ist somit nicht mehr erforderlich. Vielmehr kann die Werkstückspannvorrichtung 10 mit der in dieser gehaltenen Turbinenschaufel 12 von einer Maschine zur Nächsten transportiert werden.

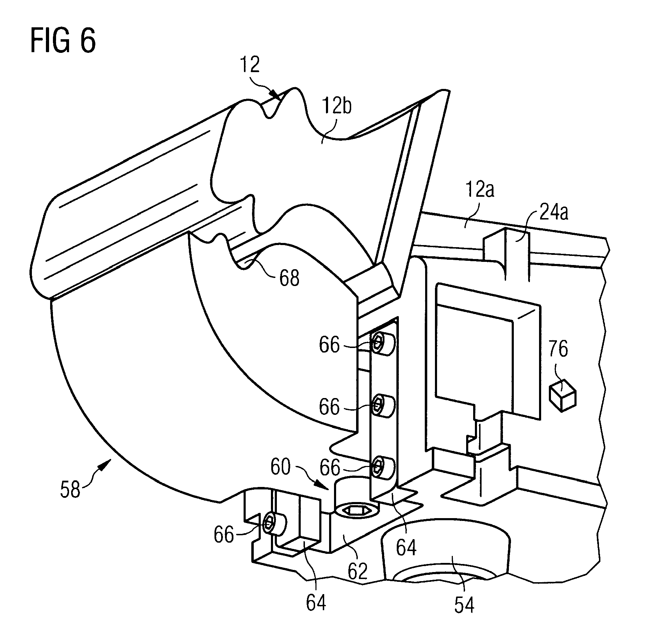

Wie es in Figur 6 gezeigt ist, kann an der zum Schaufelfuß 12b der Turbinenschaufel 12 weisenden Stirnseite des Grundkörpers 14 eine Schaufelfußabstützeinrichtung 58 befestigt werden. Die Abstützeinrichtung umfasst einen im Wesentlichen T-förmigen Befestigungsabschnitt 60, der in eine an der Stirnseite des Grundkörpers 14 ausgebildete und sich im Wesentlichen vertikal erstreckende Befestigungsnut 62 einsetzbar und über Klemmschienen 64 klemmend in dieser fixierbar ist. Die Klemmung erfolgt, indem die Klemmschienen 64 durch das Anziehen von Klemmschrauben 66 unter Erzeugung eines Kraftschlusses auf den Befestigungsabschnitt 60 der Schaufelfußabstützeinrichtung 58 gedrückt werden. Die Schaufelfußabstützeinrichtung 58 umfasst ferner eine Abstützfläche 68, die an die ihr zugewandte Unterseite des Schaufelfußes 12b formangepasst ist und während einer maschinellen Bearbeitung der Turbinenschaufel 12 an dieser anliegt und den Schaufelfuß 12b stützt.

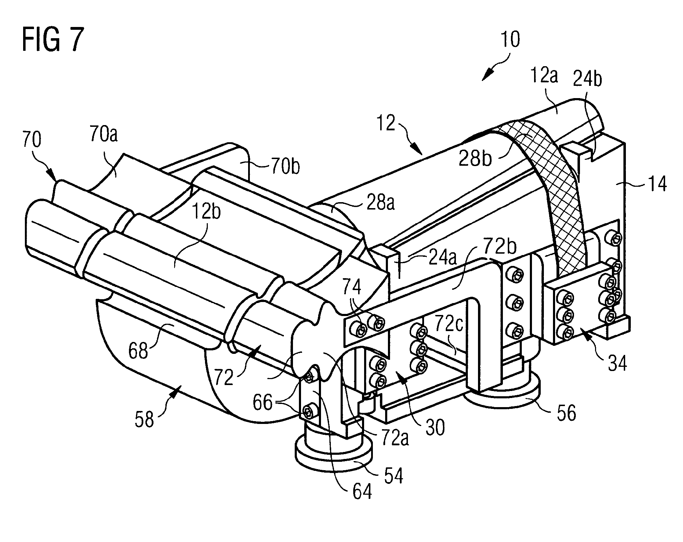

Zur Beeinflussung des Fluidflusses eines Kühlfluides während einer spanenden Bearbeitung des Schaufelfußes 12b, beispielsweise einer Schleifbearbeitung, sind, wie es in Figur 7 gezeigt ist, Kühlfluideinrichtungen 70 und 72 an dem Grundkörper 14 fixierbar. Die Kühlfluideinrichtungen 70 und 72 umfassen jeweils ein Kühlfluidblech 70a, 72a, das über Befestigungsschrauben 74 lösbar mit einem freien Ende eines im Wesentlichen L-förmigen Halteelementes 70b, 72b verbunden und entsprechend dem beabsichtigten Fluidfluss geformt ist. An dem anderen freien Ende jedes Halteelementes 70b, 72b ist jeweils eine Befestigungsstange 70c, 72c fixiert, die einen sechseckigen Querschnitt aufweist und sich im Wesentlichen senkrecht zur Erstreckungsebene des zugeordneten Halteelementes 70b, 72b erstreckt. Die Befestigungsstangen 70c, 72c sind in entsprechend dimensionierte sechseckige Öffnungen 76 eingesetzt, die seitlich in dem Grundkörper 14 ausgebildet sind.

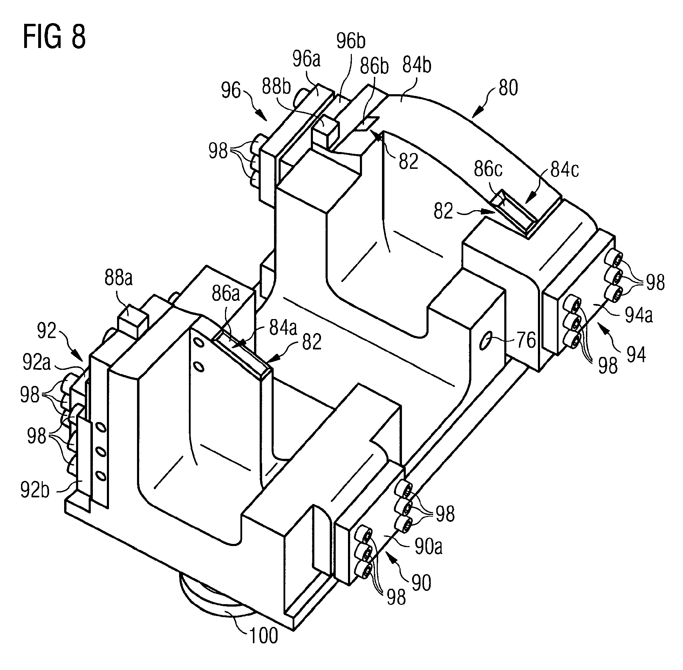

Figur 8 zeigt einen metallischen Grundkörper 80 einer Werkstückspannvorrichtung gemäß einer zweiten Ausführungsform der vorliegenden Erfindung. Der Grundkörper 80 umfasst eine Werkstückaufnahme 82, die drei einteilig mit dem Grundkörper 14 ausgebildete Auflageelemente 84a, 84b und 84c aufweist, die jeweils eine an die Unterseite des Schaufelblattes 12a formangepasste Auflagefläche 86a, 86b und 86c zur Aufnahme einer Unterseite eines Schaufelblattes 12a einer Turbinenschaufel 12 definieren. Auf diese Weise wird ähnlich wie bei der in den Figuren 1 bis 7 dargestellten Werkstückspannvorrichtung 10 eine Werkstückaufnahme nach Art einer Dreipunktlagerung erzeugt. Ferner umfasst der Grundkörper 14 zwei Schaufelblattanschläge 88a und 88b in Form von einteilig mit dem Grundkörper 80 ausgebildete und aufwärts vorstehenden Vorsprüngen, an denen das Schaufelblatt 12a der Turbinenschaufel 12 seitlich zur Anlage kommt. Ferner ist an der dem Schaufelfuß 12b der Turbinenschaufel 12 zugewandten Stirnseite des Grundkörpers 14 ein in Figur 8 nicht näher dargestellten Schaufelfußanschlag ausgebildet, wie es zuvor unter Bezugnahme auf die erste Ausführungsform bereits beschrieben wurde. Entsprechend kann eine vorbestimmte Positionierung der Turbinenschaufel 12 an dem Grundkörper 14 erzielt werden.

Zum Spannen der Turbinenschaufel 12 an dem Grundkörper 14 dienen zwei in Figur 8 nicht näher dargestellte Spanngurte, die jeweils zwischen zwei einander gegenüberliegende am Grundkörper 14 vorgesehenen Klemmeinrichtungen 90 und 92 bzw. 94 und 96 klemmend gehalten sind. Die Klemmeinrichtungen 90 und 94 umfassen jeweils eine Klemmplatte 90a, 94a, die mit Hilfe von Befestigungsschrauben 98 lösbar an dem Grundkörper 80 fixierbar ist, um einen Spanngurt klemmend zwischen der Klemmplatte 90a, 94a und dem Grundkörper 80 zu halten. Die anderen beiden Klemmeinrichtungen 92 und 96 umfassen jeweils zwei Klemmplatten 92a und 92b bzw. 96a und 96b, die unter Verwendung von Befestigungsschrauben 98 aneinander fixierbar sind, so dass zwischen diesen ein Spanngurt klemmend gehalten werden kann. Die Klemmeinrichtungen 92 und 96 sind, auch wenn dies in Figur 8 nicht zu erkennen ist, ähnlich wie bei der ersten Ausführungsform jeweils mit einer automatischen Spanneinrichtung wirkverbunden, genauer gesagt mit einer sich im Wesentlichen vertikal erstreckenden Kolbenstange eines die Spanneinrichtung bildenden hydraulischen Linearmotors. Entsprechend können die Klemmeinrichtungen 92 und 96 unter Betätigung des Linearantriebes zusammen mit den zugeordneten Kolbenstangen auf- und abwärts bewegt werden, um auf diese Weise den zugeordneten Spanngurt wahlweise zu spannen oder zu entspannen.

An der Unterseite des Grundkörpers 80 sind zwei Anzugsbolzen 100 befestigt, die dazu dienen, den Grundkörper 80 an Nullpunkt-Spannsystemen verschiedener Werkzeugmaschinen zu befestigen, um die Turbinenschaufel 12 entsprechend bearbeiten zu können. Ebenso wie bei der ersten Ausführungsform können auch an dem Grundkörper 80 eine Schaufelfußstützeinrichtung und/oder eine oder mehrere Kühlfluidleiteinrichtungen befestigt werden.

Der Grundkörper 80 ist verglichen mit dem in den Figuren 1 bis 7 dargestellten Grundkörper 14 weniger massiv ausgebildet, wodurch insbesondere Gewicht eingespart wird, was den Transport des Grundkörpers 80 von einer Werkzeugmaschine zur anderen erleichtert.

## Patentansprüche

1. Werkstückspannvorrichtung (10) zum Spannen eines Werkstückes (12), insbesondere einer Turbinenschaufel (12) im Bereich des Schaufelblattes (12a), während einer maschinellen Bearbeitung, die einen Grundkörper (14; 80) mit einer Werkstückaufnahme (16; 82) aufweist,
**dadurch gekennzeichnet, dass**
wenigstens ein Spanngurt (28a; 28b) zum Spannen des Werkstückes (12) vorgesehen ist.

2. Werkstückspannvorrichtung (10) nach Anspruch 1,
**dadurch gekennzeichnet, dass**
der wenigstens eine Spanngurt (28a; 28b) aus einem Fasermaterial hergestellt ist.

3. Werkstückspannvorrichtung (10) nach Anspruch 2,
**dadurch gekennzeichnet, dass**
das Fasermaterial ein Gewebe mit hoher Reißfestigkeit ist.

4. Werkstückspannvorrichtung (10) nach einem der vorhergehenden Ansprüche,
**dadurch gekennzeichnet, dass**
der wenigstens eine Spanngurt (28a; 28b) in seiner Spannlänge einstellbar an dem Grundkörper (14; 80) fixierbar ist.

5. Werkstückspannvorrichtung (10) nach einem der vorhergehenden Ansprüche,
**dadurch gekennzeichnet, dass**
die Werkstückaufnahme (16; 82) zumindest teilweise durch Auflagepunkte oder Auflageflächen (22a; 22b; 22c; 86a; 86b; 86c) definierende Auflageelemente (20a; 20b; 20c; 84a; 84b; 84c) gebildet ist.

6. Werkstückspannvorrichtung (10) nach einem der vorherigen Ansprüche,
**dadurch gekennzeichnet, dass**
die Werkstückaufnahme (16; 82) zumindest teilweise durch wenigstens eine Auflagefläche (22a; 22b; 22c; 86a; 86b; 86c) definiert ist, deren Kontur zumindest teilweise an eine Außenkontur eines zu spannenden Werkstücks (12) formangepasst ist, insbesondere an die Außenkontur eines Turbinenschaufelblattes (12a).

7. Werkstückspannvorrichtung (10) nach einem der vorhergehenden Ansprüche,
**dadurch gekennzeichnet, dass**
an dem Grundkörper (14; 80) Klemmeinrichtungen (30; 32; 34; 36; 90; 92; 94; 96) zum Fixieren des wenigstens einen Spanngurtes (28a; 28b) vorgesehen sind.

8. Werkstückspannvorrichtung (10) nach einem der vorhergehenden Ansprüche,
**dadurch gekennzeichnet, dass**
zumindest eine automatische Spanneinrichtung (42; 44) vorgesehen ist, die derart ausgebildet ist, dass sie den wenigstens einen Spanngurt (28a; 28b) automatisch bis zum Erreichen einer vorbestimmten Spannkraft spannt.

9. Werkstückspannvorrichtung (10) nach Anspruch 8,
**dadurch gekennzeichnet, dass**
die zumindest eine Spanneinrichtung (42; 44) einen Linearmotor umfasst, an dessen Kolbenstange (46; 48) eine Klemmeinrichtung (32; 36) befestigt ist.

10. Werkstückspannvorrichtung (10) nach einem der vorhergehenden Ansprüche,
**dadurch gekennzeichnet, dass**
der Grundkörper (14; 80) lösbar an verschiedenen Werkstückbearbeitungsmaschinen montierbar ist.

11. Werkstückspannvorrichtung (10) nach einem der vorhergehenden Ansprüche,
**dadurch gekennzeichnet, dass**
der Grundkörper (14; 80) derart ausgebildet ist, dass er sich lösbar unter Verwendung eines Nullpunkt-Spannsystems in einer Werkstückbearbeitungsmaschine montieren lässt.

12. Werkstückspannvorrichtung (10) nach Anspruch 11,
**dadurch gekennzeichnet, dass**
der Grundkörper (14; 80) wenigstens ein mit einem Nullpunkt-Spannsystem zusammenwirkendes Spannelement (54; 56; 100) insbesondere in Form eines Anzugsbolzens aufweist.

13. Werkstückspannvorrichtung (10) nach einem der vorhergehenden Ansprüche,
**dadurch gekennzeichnet, dass**
an dem Grundkörper (14; 80) wenigstens eine Werkstückabstützeinrichtung (58) derart befestigbar ist, dass eine an dieser ausgebildete Abstützfläche (68) mit dem Werkstück zur Anlage kommt.

14. Werkstückspannvorrichtung (10) nach einem der vorhergehenden Ansprüche,
**dadurch gekennzeichnet, dass**
an dem Grundkörper (14; 80) wenigstens eine Kühlfluidleiteinrichtung (70; 72) derart befestigbar ist, dass der Fluidstrom eines Kühlfluides während einer spanenden Bearbeitung des Werkstückes in vorbestimmter Weise beeinflusst wird.
